**Europäisches Patentamt**

**European Patent Office**

**Office européen des brevets**

(11) Veröffentlichungsnummer: **0 044 882**
**B1**

## (12) EUROPÄISCHE PATENTSCHRIFT

(45) Veröffentlichungstag der Patentschrift: 04.07.84

(51) Int. Cl.³: **B 29 D 27/00**

(21) Anmeldenummer: 80104508.9

(22) Anmeldetag: 30.07.80

(54) Verfahren zur kontinuierlichen Herstellung von ausgeschäumten Metallhohlprofilen.

(43) Veröffentlichungstag der Anmeldung:
03.02.82 Patentblatt 82/5

(45) Bekanntmachung des Hinweises auf die Patenterteilung:
04.07.84 Patentblatt 84/27

(84) Benannte Vertragsstaaten:
AT BE CH FR GB IT LI NL SE

(56) Entgegenhaltungen:
DE - A - 2 221 397
US - A - 3 020 587
US - A - 3 643 306
US - A - 3 846 054
US - A - 3 887 410

(73) Patentinhaber: **Türenwerke Riexinger GmbH & Co.KG**
**Industriestrasse**
**D-7129 Brackenheim-Hausen (DE)**

(72) Erfinder: **Riexinger, Gustav sen.**
**Lerchenweg 4**
**D-7129 Brackenheim-Hausen (DE)**
Erfinder: **Nagel, Rudolf**
**Cherusker Strasse 11**
**D-7036 Schöneich (DE)**

(74) Vertreter: **Schmidt-Evers, Jürgen et al,**
**Patentanwälte Dipl.-Ing. H. Mitscherlich Dipl.-Ing. K. Gunschmann Dipl.-Ing. Dr.rer.nat. W. Körber Dipl.-Ing. J. Schmidt-Evers Dipl.-Ing. W. Melzer**
**Steinsdorfstrasse 10**
**D-8000 München 22 (DE)**

## Beschreibung

Die Erfindung betrifft ein Verfahren zum kontinuierlichen Herstellen von ausgeschäumten Metallhohlprofilen, bei dem zwei Metallbänder von Rollformern geformt werden und zwischen die geformten Bänder flüssige Schaummasse gespritzt wird, die anschließend aushärtet.

Nach der US—A—3 846 054 und US—A—3 887 410 sind Verfahren zur Herstellung von ausgeschäumten Metallhohlprofilen bekannt, bei denen von zwei Metallbandrollen zwei Metallbänder abegezogen und von Rollformern geformt werden. Dabei wird eines dieser Metallbänder wannenartig geformt, so daß anschließend in dieses wannenförmige Metallband die flüssige Kunststoffschaummasse eingefüllt werden kann. Das zweite Metallband wird hierbei von oben auf dieses wannenförmige Band aufgelegt und einseitig festgeklemmt, anschließend hochgespreizt und nach dem Einfüllen der Schaummasse in die parallele Endlage gebracht. Damit dieses den "Deckel" bildende zweite Metallband nicht durch den Druck der ausschäumenden Kunststoffmasse abgehoben wird, ist es notwendig, den so gebildeten Strang in einer mitlaufenden Endlosform maßgenau zu führen. Nach den Aushärten des Kunststoffschaums wird der Strang dann auf einzelne Metallhohlprofile zersägt.

Nachteilig ist bei diesem Verfahren, daß das untere Metallband keine beliebige Form annehmen, sondern eine wannenförmige Gestalt haben muß. Weiterhin ist die Einrichtung einer maßgenauen mitlaufenden Endlosform kostspielig.

Aufgabe der Erfindung ist dementsprechend, ein Verfahren zur kontinuierlichen Herstellung von ausgeschäumten Metallhohlprofilen aus zwei Metallbändern anzugeben, bei dem die Metallbänder nicht auf eine wanneförmige Form festgelegt sind und das geeignet ist, ohne eine mitlaufenden Endlosform auszukommen.

Diese Aufgabe wird dadurch gelöst, daß die sich im wesentlichen in vertikaler Anordnung bewegenden Metallbänder in ihrem unteren Bereich mit einem Schließwerkzeug aneinandergedrückt und in ihrem oberen Bereich mit einem Spreizwerkzeug auseinandergespreizt werden, daß von oben zwischen die gespreizten Bänder flüssige Kunststoffschaummasse eingefüllt wird, und daß die Bänder sodann in ihrem oberen Bereich aneinandergedrückt und ansabließend im oberen und unteren Bereich ineindandergebogen werden.

Es ist zwar nach der US—A—3 643 306 ein Verfahren zur Herstellungeines Metallhohlprofiles bekannt, das in einer im wesentlichen vertikalen Anordnung mit Kunststoffschaummasse gefüllt wird; hierbei handelt es sich jedoch um ein Hohlprofil, das nur aus einem einzigen Metallband hergestellt wird. Das Metallband wird aufeinanderfolgend so gebogen, daß es eine Wannenform hat. Dann werden die oben liegenden Kanten miteinander verbördelt. Vor der Stelle, wo das Verbördeln erfolgt, tauchen in den Hohlraum Leitungen zur Zuführung der Kunststoffschaummasse, die sich bis an eine Stelle erstrecken, die in Laufrichtung des Kunststoffhohlprofiles hinter der Bördelteile liegt. Dort erfolgt das Einfüllen der Kunststoffschaummasse. Ein Auseinanderspreizen erfolgt hier ebenso wenig wie ein Ineinanderbiegen im unteren Bereich.

Weitere vorteilhafte Ausgestaltungen des erfindungsgemäßen Verfahrens sowie eine Vorrichtung zu seiner Durchführung sind in den Ansprüchen 2 bis 5 angegeben.

Im folgenden wird nun das erfindungsgemäße Verfahren sowie die zu seiner Ausführung benutzte Vorrichtung anhand des in den Figuren dargestellten bevorzugten Ausführungsbeispiel beschrieben und näher erläutert.

Fig. 1 zeigt das Andrücken und Spreizen der Metallbänder.

Fig. 2 zeigt eine Seitenansicht der Vorrichtung zur Durchführung des Verfahrens.

Fig. 3 zeigt eine Draufsicht auf die Vorrichtung nach Fig. 2.

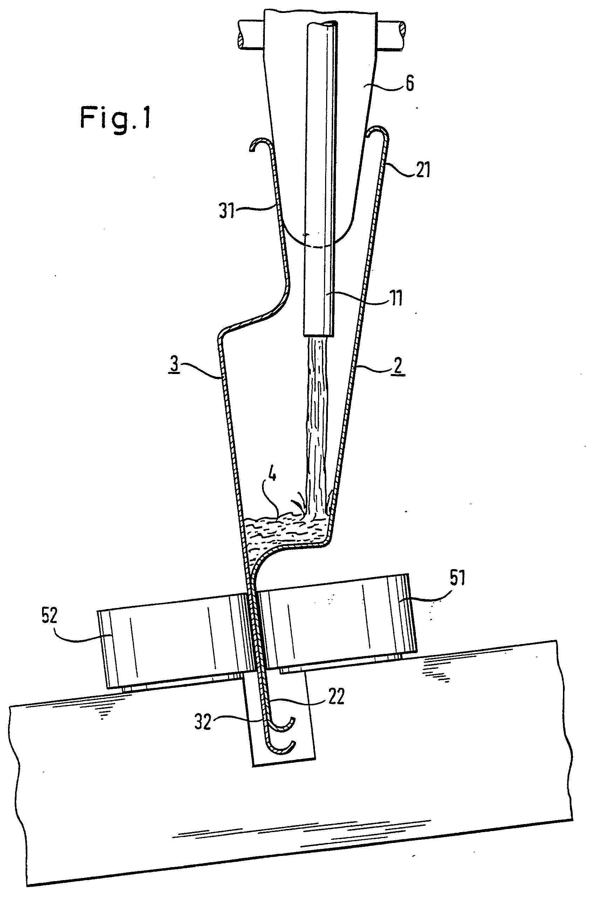

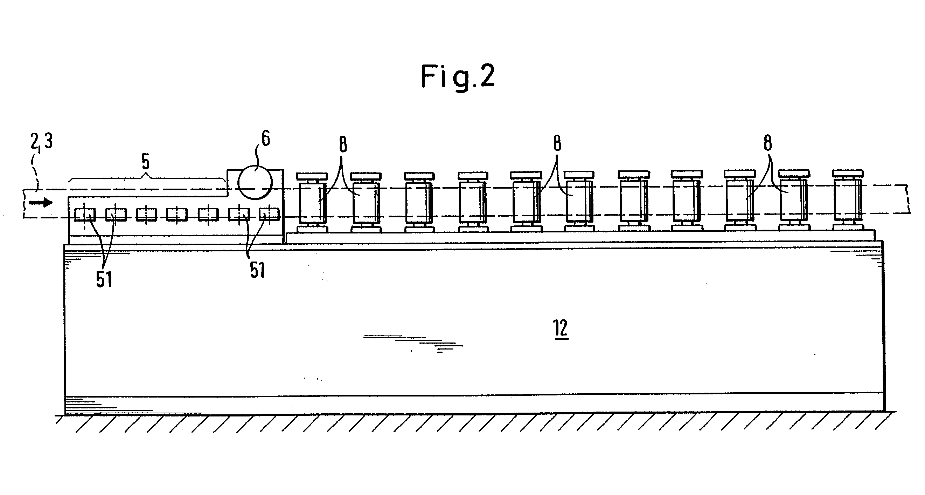

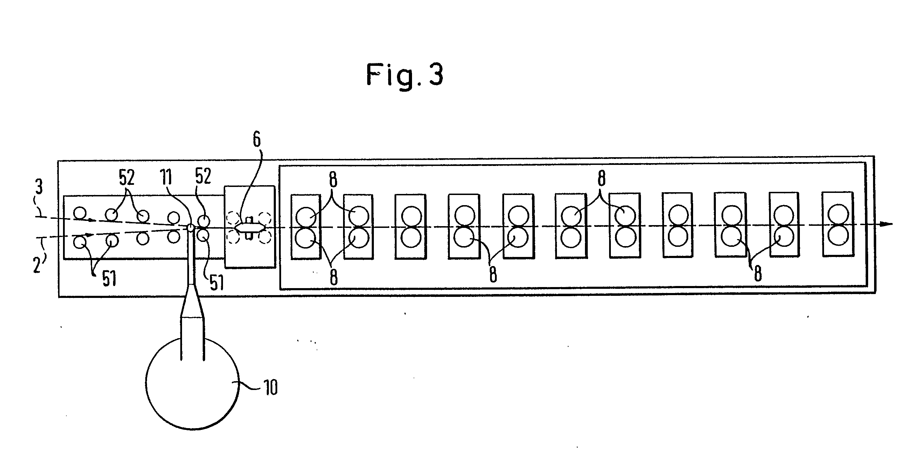

Die Fig. 1 verdeutlicht das erfindungsgemäße Verfahren. Die beiden von Rollformern vorgeformten Metallbänder 2, 3 werden aneinandergeführt und in ihrem unteren Bereich 22, 32 von Schließrollen 51, 52 aneinandergedrückt. Um ein Einfüllen der Kunststoffschaummasse 4 zu ermöglichen, werden sie in ihrem oberen Bereich 21, 31 von einer Spreizrolle 6 gespreizt und im Abstand voneinander gehalten. Dies ermöglicht das Einfüllen der Kunststoffschaummasse 4 mittels einer zwischen die Metallbänder 2, 3 hineinragenden Austrittsdüse 11 einer Kunstoffschaummaschine 10. Diese Kunststoffschaummaschine ist in der Fig. 1 nicht dargestellt. Die Fig. 2 und 3, die eine Seitenansicht und eine Draufsicht der zur Durchführung des Verfahrens verwendeten Vorrichtung darstellen, verdeutlichen den Verfahrensgang. Anhand der Fig. 3 ist ersichtlich, daß die von links einlaufenden, durch die strichlierten Linien angedeuteten Metallbänder 2, 3 von den Schließrollen 51, 52 zusammengeführt und an ihren unteren Enden aneinander angedrückt werden. Die hinter den Schließrollen angeordnete Spreizrolle 6 sorgt dafür, daß die oberen Enden der Metallbänder 2, 3 gespreizt sind. In dem dargestellten Beispiel ist die Austrittsdüse 11 der Kunststoffschaummaschine 10 vor der Spreizrolle 6 angeordnet. Statt dessen kann sie aber auch hinter der Spreizrolle angeordnet sein. Die nachfolgenden Befestigungsrollen 8 dienen dazu, die Metallbänder 2, 3 an ihren Oberkanten und Unterkanten beispielsweise krallenförmig ineinanderzubiegen und dadurch aneinander zu befestigen. Nach Durchlaufen dieser Befestigungsrollen gelangt das so gebildete Metallhohlprofil auf eine Aushärtestrecke. Die Schließrollen 51, 52, die Spreizrolle 6 und die Befestigungsrollen 8 sind zu einer Rollenformmaschine zusammengefaßt. Dies ermöglicht es, daß die zusammengefügten Metallbänder optimal ausgerichtet auf die Aushärtestrecke gelangen.

**Patentansprüche**

1. Verfahren zum kontinuierlichen Herstellen von ausgeschäumten Metallhohlprofilen, bie dem zwei Metallbänder (2, 3) von Rollformern geformt werden und zwischen die geformten Bänder (2, 3) flüssige Schaummasse (4) gespritzt wird, die anschließend aushärtet, dadurch gekennzeichnet, daß die sich im westentlichen in vestikaler Anordnung bewegenden Metallbänder (2, 3) in ihrem unteren Bereich (22, 32) mit einem Schließwerkzeug (5, 51, 52) aneinandergedrückt und in ihrem oberen Bereich (21, 31) mit einem Spreizwerkzeug (6) auseinandergespreizt werden, daß von oben zwischen die gespreizten Bänder (2, 3) flüssige Kunststoffschaummasse (4) eingefüllt wird, und daß die Bänder (2, 3) sodann in ihrem oberen Bereich (21, 31) aneinandergedruckt und anschließund im oberen und unteren Bereich ineinandergebozen werden.

2. Verfahren nach Ansprüche 1, dadurch gekennzeichnet, daß als Schließwerkzeug ein Paar von Rollen (51, 52) und als Spreizwerkzeug eine Spreizrolle (6) verwendet wird.

3. Verfahren nach Anspruch 1, dadurch gekennzeichnet, daß zum Ineinanderbiegen der Metallbänder (2, 3) Befestigungsrollen (8) verwendet werden.

4. Vorrichtung zur Durchführung eines Verfahrens nach einem der Ansprüche 1 bis 3, gekennzeichnet durch zwei oder mehrere Schließrollen (51, 52), eine oder mehrere oberhalb der Schließrollen (51, 52) angebrachte Spreizrolle (6), eine Kunststoffschaummaschine (10) mit einer in der Nähe der Spreizrolle (6) befindlichen Austrittdüse (11) und mit oberen und unteren Befestigungsrollen (8).

5. Vorrichtung nach Anspruch 4, dadurch gekennzeichnet, daß die Schließrollen (51, 52) die Befestigungsrollen (8) und die Spreizrolle (6) zu einer Rollenformmaschine (12) zusammengefaßt sind.

**Revendications**

1. Procédé pour réaliser en continu des profilés métalliques creux remplis de mousee, à partir de deux bandes métalliques (2, 3) mises en forme par des galets de profilage, et entre lesquelles on injecte une mousse (4) à l'état fluide que l'on durcit ensuite; le procédé étant caractérisé en ce qu'on serre l'une contre l'autre, au moyen d'un outil de serrage (5, 51, 52) les parties inférieures (22, 32) des deux bandes métalliques (2, 3), qui se déplacent en ayant leurs profils disposés sensibiement à la verticale; en ce qu'on écarte l'une de l'autre les parties supérieures (21, 31) des deux bandes métalliques, au moyen d'un outil d'écartement (6); en ce qu'on garnit par en-haut le volume compris entre les deux bandes écartées (2, 3), au moyen de mousse de matière plastique (4) à l'état fluide; et en ce qu'on applique ensuite l'une contre l'autre les parties supérieures (21, 31) des deux bandes métalliques, pour leur donner un profil d'assemblage, en repliant ces deux bandes l'une sur l'autre.

2. Procédé selon la revendication 1, caractérisé en ce que l'outil de serrage est constitué par une paire de galets (51, 52), et l'outil d'écartement par un galet d'écartement (6).

3. Procédé selon la revendication 1, caractérisé en ce qu'on utilise des galets d'assemblage (8) pour replier les deux bandes l'une sur l'autre.

4. Dispositif pour l'application du procédé défini par l'une des revendications 1 à 3, caractérisé en ce qu'il comporte au moins deux galets de serrage (51, 52), et au moins un galet d'écartement (6) disposé au-dessus des galets de serrage (51, 52); une machine (10) de production de mousse de matière plastique, pourvue d'une tabulure de débit (11) située au voisinage du galet d'écartement (6); et des galets d'assemblage (8) supérieurs et inférieurs.

5. Dispositif selon la revendication 4, caractérisé en ce que les galets de serrage (51, 52), les galets d'assemblage (8) et le galet d'écartement (6) sont montés sur une machine de profilage (12) à galets.

**Claims**

1. Method for the continuous production of hollow metal foam-filled sections in which two metal bands (2, 3) are moulded by moulding rollers and liquid foam material (4), which subsequently hardens, is injected between the moulded bands (2, 3) characterised in that the metal bands (2, 3) moving in an essentially vertical arrangement are pressed together at their lower region (22, 32) by means of a closing tool (5, 51, 52) and are spread apart at their upper region (21, 31) by means of a spreading tool (6), in that from above liquid foam plastics material (4) is poured in between the spread-apart bands (2, 3), and in that the upper regions (21, 31) of the bands (2, 3) are then pressed together and their upper and lower regions then bent into one another.

2. Method according to claim 1, characterised in that a pair of rollers (51, 52) is used as the closing tool and a spreading roller (6) is used as the spreading tool.

3. Method according to claim 1, characterised in that fixing rollers (8) are used to bend the metal bands (2, 3) into one another.

4. Apparatus for implementing a method according to one of claims 1 to 3, characterised by two or more closing rollers (51, 52), one or more spreading rollers (6) mounted above the closing rollers (51, 52), a foam plastics machine (10) with an outlet nozzle (11) in the vicinity of the spreading roller (6), and with upper and lower fixing rollers (8).

5. Apparatus according to claim 4, characterized in that the closing rollers (51, 52), the fixing rollers (8) and the spreading roller (6) are comprised in one roll moulding machine (12).

Fig.1

# Fig.2

0 044 882

# Fig. 3